# EUROPEAN PATENT APPLICATION

(11) **EP 4 203 472 A1**
(43) Date of publication of application: **28.06.2023**
(21) Application number: 21216299.4
(22) Date of filing: 21.12.2021
(51) Int. Cl.: H04N 19/114, H04N 19/156, H04N 19/172, H04N 19/177, H04N 19/132, H04N 19/31, H04N 19/40

(54) **METHOD AND IMAGE PROCESSING DEVICE FOR ENCODING A VIDEO**

(71) Applicant: Axis AB, 223 69 Lund (SE)
(72) Inventor: Pettersson, Mattias x, 223 69 Lund (SE); Edpalm, Viktor, 223 69 Lund (SE); Keskikangas, Axel, 223 69 Lund (SE)
(74) Representative: AWA Sweden AB

(57) **Abstract**

A method and image processing device (100) for encoding a video comprising a sequence of image frames captured between a first and a second time is disclosed. The method comprises encoding (10) a subset of the image frames, wherein the image frames of the subset are distributed over the sequence and storing (20) the remaining image frames of the sequence. After the second time, the encoded subset is decoded (30) and the stored remaining image frames as well as the decoded encoded subset are encoded (32) to generate the encoded video. Alternatively, the stored remaining image frames are encoded (40) and the encoded subset added (42) to generate the encoded video.

## Description

### Technical field

The present invention relates to video encoding, and specifically to a method and an image processing device configured to encode a video comprising a sequence of image frames.

### Background

Image processing devices are included in many different applications and are commonly used for surveillance and monitoring purposes. An image processing device may for instance be included in a camera used by police officers, such as a body worn camera, for capturing a video stream during patrols and incidents. Such cameras are typically battery powered, and often desired to be operable during an entire work shift (such as 8-12 hours) without recharging. Hence, there are limitations in power available for the operation of the image processing device. Furthermore, cameras may transmit a captured video via a wireless connection. Hence, the bitrate available for such transmission is also a limiting factor in relation to encoding of the video.

### Summary of the invention

It is an object of the present invention to facilitate bitrate savings and/or battery savings for a video comprising a sequence of image frames.

According to a first aspect, a method for encoding a video comprising a sequence of image frames captured between a first and a second time is provided. The method comprises:
a) encoding a subset of the image frames, wherein the image frames of the subset are distributed over the sequence,
b) storing the remaining image frames of the sequence, and
after the second time:
c) decoding the encoded subset and encoding the stored remaining image frames and the decoded encoded subset, thereby generating the encoded video, or
d) encoding the stored remaining image frames and adding the encoded subset, thereby generating the encoded video.

According to a second aspect, an image processing device is provided, which is configured to encode a video comprising a sequence of image frames captured between a first and a second time. The image processing device comprises:
an encoder configured to encode image frames of the sequence,
a memory configured to store image frames of the sequence, and
a circuitry configured to provide a subset of the image frames to the encoder to generate an encoded subset, wherein the image frames of the subset are distributed over the sequence, and to provide the remaining image frames of the sequence to the memory.

In a first option, the image processing device further comprises a decoder, wherein the circuitry is configured to provide, after the second time, the encoded subset to the decoder to generate a decoded encoded subset. The circuitry is further configured to provide the decoded encoded subset and the stored remaining image frames to the encoder to generate the encoded video.

In a second option, the circuitry is configured to provide, after the second time, the stored remaining image frames to the encoder. The circuitry is further configured to instruct the encoder to encode the stored remaining image frames and to add the encoded subset to generate an encoded video.

The inventors have realized that by partially encoding the video and save the rest of the video until later, bitrate and power may be saved in situations where such resources are limited. The first subset of image frames may hence be encoded using reduced resources, while the rest of the image frames may be stored until more resources are available again for a complete encoding. This may be of particular interest in cameras that are used periodically, for example by the police during patrols and incidents. The present invention allows for the video to be partially encoded, i.e., encoded at a lower frame rate, in real time and the complete video to be encoded afterwards, for instance when the camera is connected to a power supply or a wired connection for transmission of the video. "Afterwards" may, in the context of the present disclosure, refer to a time after the second time, i.e., after the sequence has been captured. This may for example coincide with a period during which the camera is connected to a docking station or a power supply.

By encoding a subset of the image frames, which are distributed over the sequence captured between the first and second time, the bitrate required for the encoding of the subset may be reduced in relation to if the complete video would have been encoded. An advantage of reducing the bitrate is that is allows for the bandwidth for wirelessly transmitting the encoded subset may be reduced. Further, the reduced bitrate also requires less processing resources, which may be beneficial from an energy consumption perspective.

At the later point in time, that is, after the sequence of image frames has been captured, there are two options for generating the encoded video: in a first option, the encoded subset may be decoded and used as input for the encoding of the previously stored remaining image frames of the sequence. The decoded image frames of the encoded subset may hence act as inter frames, or P-frames, for the remaining image frames. In a second option, the stored remaining image frames are encoded as a separate chain, independent from the encoded first subset of image frames, and combined with the encoded first subset into the video.

Hence, the stored remaining image frames may be encoded in a hierarchical frame structure, in which the stored remaining image frames are encoded in an enhancement layer and the subset is encoded in a base layer. This allows for a temporal scalability of the video.

Further, available processing resources may be determined for the encoding. The steps of decoding the encoded subset and encoding the stored remaining image frames and the decoded encoded subset, as well as the steps of encoding the stored remaining image frames and adding the encoded subset, may be performed at a time after the second time, based on the determined available processing resources. In different words, the encoding of the complete video may be performed at a later point in time, when there are more available resources in terms of for instance processing resources, bandwidth, or power. The available resources may for example be determined by monitoring current processing capacity. In further examples, the available resources may be determined based on the current use of the image processing device (or the camera, in which the image processing device may be included). The encoding of the complete video may for instance be performed in periods when the camera is not used, or idling, such as between patrols or incidents. Further, the encoding of the complete video may be performed when the camera is connected to a power supply for charging the battery, or when the camera is connected to a high bandwidth connection, such as a wired connection. In some examples, the encoding of the complete video may be performed when the camera is connected to a docking station.

The subset may be formed of half of the image frames of the sequence, such as every second. Alternatively, the subset comprises less than half of the image frames, or more than half of the image frames, depending on the desired bit rate at which the subset is to be encoded. In some examples, the subset may be formed by selecting every n^{th} image frame of the sequence, wherein n is one of 2, 3, ..., 10.

It will be appreciated that the term "distributed" generally refers to the image frames of the subset being substantially evenly spread over the sequence, and preferably over the entire sequence. The distribution of the image frames may advantageously be selected to provide a relatively fair representation of the contents of the video, allowing the encoded subset of the image frames to be used for object analytics. Hence, the first one of the image frames of the subset may be captured at, or close to, the first time whereas the last one of the image frames of the subset may be captured at, or close to, the second time.

The encoded subset may comprise an intra-encoded frame, I-frame, and inter-encoded frames using prediction depending on the intra-encoded frame. Hence, the encoder may be configured to generate an encoded video stream of the subset, in which stream some of the image frames of the subset are encoded as intra frames or key frames, and some of the image frames of the subset as inter frames referring to previous frames for data reference. The inter-encoded frames may be in the form of P-frames or B-frames.

The circuitry may be configured to provide the remaining image frames of the sequence to the memory, on which the image frames may be stored in a compressed format. This allows for the available storage area to be more efficiently used. The images may for example be compressed using a JPEG format.

According to a third aspect a camera is provided, comprising the image processing device according to the second aspect. Thus, the camera may comprise an encoder configured to encode image frames of a sequence of image frames captured between a first and a second time, a memory configured to store image frames of the sequence, and a circuitry configured to provide a subset of the image frames to the encoder to generate an encoded subset, wherein the image frames of the subset are distributed over the sequence, and to provide the remaining image frames of the sequence to the memory. The camera may further comprise a decoder, and the circuitry may further be configured to provide, after the second time, the encoded subset to the decoder to generate a decoded encoded subset, and to provide the decoded encoded subset and the stored remaining image frames the encoder to generate the encoded video. Alternatively, the circuitry is configured to provide, after the second time, the stored remaining image frames to the encoder, and to instruct the encoder to encode the stored remaining image frames and to add the encoded subset to generate an encoded video.

The camera may for example be a portable camera, such as a wearable camera. In some examples, the wearable camera is a body worn cameras, BWC.

According to a fourth aspect a non-transitory computer readable medium is provided. The non-transitory computer readable medium has instructions, possibly in the form of computer readable program code, stored thereon which when executed on a device having processing capability is configured to perform the method of the first aspect. The device having processing capability may be an image processing device according to the second aspect or a camera according to the third aspect.

A further scope of applicability of the present invention will become apparent from the detailed description given below. However, is should be understood that the detailed description and specific examples, while indicating preferred embodiments of the invention, are given by way of illustration only, since various changes and modification within the scope of the invention will become apparent to those skilled in the art from this detailed description.

Hence, it is to be understood that this invention is not limited to the particular component parts of the devices described or acts of the methods described, as such devices and methods may vary. It is also to be understood that the terminology used herein is for purpose of describing particular embodiments only and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings to not exclude other elements or steps.

### Brief description of the drawings

The above and other aspects of the present invention will now be described in more detail, with reference to the appended figures. The figures should not be considered limiting but are instead used for explaining and understanding. Like reference numerals refer to like elements throughout.
Figure 1 is a schematic block diagram of an image processing device.
Figures 2a-d schematically illustrate image frame structures according to some embodiments.
Figure 3 is a schematic block diagram of a camera comprising such an image processing device.
Figure 4 is a flow chart of a method for encoding a video comprising a sequence of image frames captured between a first and a second time.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein. Rather, these embodiments are provided for thoroughness and completeness, and to convey the scope of the invention to the skilled person.

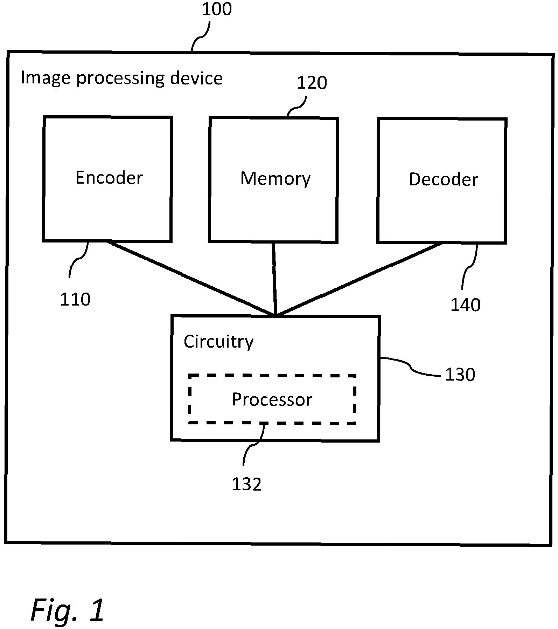

Figure 1 illustrates an image processing device 100. The image processing device 100 is configured to encode a video comprising a sequence of image frames captured between a first and a second time. The image processing device 100 comprises an encoder 110 configured to encode image frames of the sequence, a memory 120 configured to store image frames of the sequence, and a circuitry 130. The circuitry 130 is configured to provide a subset of the image frames to the encoder to generate an encoded subset. Preferably, the image frames of the subset are distributed substantially evenly over the sequence, such that a first image frame of the subset is captured at, or close to, the first time and a last image frame of the subset is captured at, or close to, the second time. With this arrangement, the video may be partially encoded, preferably during the period defined by the first and second time, and at a reduced bit rate.

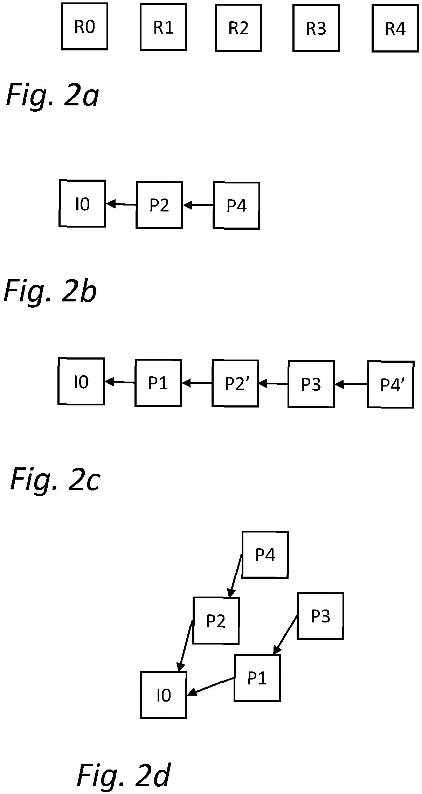

The operation of the image processing device 100 may be illustrated by the following examples of a sequence comprising image frames R0, R1, R2, R3 and R4, shown in figure 2a. The frames, which may be considered as raw image frames, may be provided from an image capturing device such as a camera having an image sensor (not shown). In the partial encoding, image frames R0, R2 and R4 may be selected as the subset of image frames distributed over the sequence. The subset may be sent to the encoder 110 to generate the encoded subset I0 <- P2 <- P4, as illustrated in figure 2b. I0 is an intra-encoded frame based on R0, P2 is an inter-encoded frame depending on I0 and P4 an inter-encoded frame depending on P2.

The circuitry 130 may be further configured to provide the remaining image frames of the sequence, that is, the image frames not forming part of the encoded subset, to the memory 120 for later use. In the example illustrated above, this would correspond to image frames R1 and R3. The remaining image frames may for example be stored in a compressed format, using for example JPEG compression. The memory 120 may preferably be a persistent memory configured to store the remaining image frames at least until after the second time. For example, the memory 120 may be a local data storage in the form of an SD card reader and an SD card. Another example of a local data storage may be in the form of a flash memory, such as a NAND flash. The memory 120 may exchange data with the circuitry 130 over a data bus. Accompanying control lines and an address bus between the memory 120 and the circuitry 130 may also be present.

The image processing device 100 may in a first option comprise a decoder 140, to which the circuitry 130 may be configured to provide the encoded subset after the second time. The encoded subset may be provided to the decoder 140 for decoding, resulting in a decoded encoded subset of image frames of the sequence. In the example illustrated above, the encoded subset I0 <- P2 <- P4 may be decoded, by the decoder 140, into 10, R2' and R4' (where R2' and R4' are the decoded versions of R2 and R4, respectively).

The decoded encoded subset may then be provided together with the stored remaining image frames to the encoder 110, which may generate the encoded video. Referring to the above example, the image frames 10, R1, R2', R3 and R4' may be provided to the encoder 110 to generate the encoded image frames I0 <- P1 <- P2' <- P3 <- P4', as illustrated in figure 2c. Since there will be a decoding and new encoding (transcoding) of the encoded subset, the result may differ slightly from the result which otherwise would have been achieved if all the frames were encoded at the same time.

In a second option, the circuitry 130 may instead be configured to provide, after the second time, the stored remaining image frames to the encoder 110 and to instruct the encoder to encode the stored remaining image frames and add the encoded subset to generate the encoded video. In the above example, this would correspond to R0, R1, R2, R3 and R4 being encoded in different layers, wherein I0 <- P2 <- P4 may form a base layer and P1 <- P3 an enhancement layer as illustrated in figure 2d. The base layer may thus be viewable separately and may further be combined with the enhancement layer for generating the encoded video. P1 may for instance be an intra-encoded frame and does therefore not necessarily require information from the I0 image frame. The two separate chains, such as the base layer and the enhancement layer, may be combined into the encoded video by means of a CPU. Note that the frame structure may be seen as a continuous stream of frames. The use of branches extending upwards in figure 2d is merely an approach to clarify the structure of the hierarchical coding structure and the layered structure of the hierarchical prediction pattern.

The circuitry 130 may be configured to carry out functions of the image processing device 100. The circuitry may include a processor 132, such as a central processing unit (CPU), microcontroller, or microprocessor. The processor 132 is configured to execute program code. The program code may for example be configured to carry out the functions of the image processing device 100.

As already mentioned, the encoder 110 may be configured to encode image frames into a video stream, also referred to as an encoded video. Typically, the encoder 110 is configured to encode some of the image frames as intra frames, and some of the image frames as inter frames, as illustrated above. As will be appreciated by a person skilled in the art, an intra frame is an encoded frame that does not require information from other encoded framed to be decoded. Hence, an intra frame is encoded based on information from the image frame it is set to correspond to. Typically, similarities within the image frame are used to encode the image frame into an intra frame. In video encoding an intra frame is often referred to as an I-frame.

The image frames of the video stream in between two intra frames are encoded as inter frames. Typically, an inter frame only comprises changes that occur from one frame to the next. Hence, inter frames typically comprise less data than intra frames. In video encoding an inter frame is often referred to as a P-frame, referring to previous frames for data reference, or a B-frame, referring to both previous and later frames for data reference.

The image frame is compared to a reference frame. For example, the reference frame for encoding a P-frame is a previous image frame. A matching algorithm may be used to identify matching groups of pixels between the image frame to be encoded and the reference frame, and if a match is found for a group of pixels, that group of pixels may be encoded as a motion vector specifying how the group of pixels has moved in the image frame since the reference frame. In addition, a residual between the group of pixels and the found matching group of pixels is encoded.

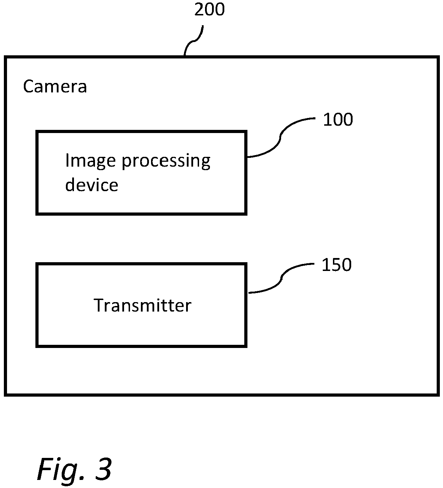

Figure 3 depicts a camera 200 comprising an image processing device 100, which may be similarly configured as the image processing device disclosed above in connection with figure 1. The camera 200 may further comprise an image sensor (not shown), configured to capture image data, such as data of image frames. Image sensors and capturing of image data are well known for the person skilled in the art and will not be discussed in any more detail in this disclosure.

The camera 200 may for example be a portable camera, such as a body worn camera, BWC. The camera 200 may be a separate unit or it may be integrated in another unit, such as in a helmet, glasses, etc. The camera 200 may be used, for instance, by police officers for capturing video and possibly other data during patrols and incidents. The wearer of the camera may for example initiate the capturing of the image frame sequence at the first time and stop the capturing at the second time.

Captured data may subsequently by needed as evidence, for example when investigating crimes and prosecuting suspected criminals. In order to preserve the captured data, a data management system external from the camera 200, such as a video management system or an evidence management system, may be used. Examples of such systems include digital video recorders and network-attached storages. The data management systems generally provide storage of captured data, and may also allow viewing of the captured data, either in real time or as a playback of recorded data. It may therefore be desired to access a video formed by the encoded subset (i.e., the partially encoded sequence), preferably in real time, as well as the later encoded complete video.

Typically, the camera 200 is battery powered and has a limited bitrate. The latter may be due to limited local data storage and/or limitations in bandwidth for a wireless connection to the data management system or to a central where a live feed is viewed. Furthermore, the limitation in bandwidth for the wireless connection may vary over time such that the bitrate occasionally becomes even more limited. It may therefore be beneficial to encode only the subset of the image frames in a first step and save the encoding of the remaining image frames until later. Thus, the circuitry 130 of the image processing device 100 may be configured to determine if there are available resources for the encoding, and instruct the encoder 110 to generate the encoded video after the second time, in case sufficient resources for the encoding has been determined to be available. The subset may for instance be encoded to allow the captured data to be viewed in real time, for example by the data management system external from the camera 200, as mentioned above. Thereafter, the complete encoding (i.e., the generation of the encoded video comprising the entire sequence of image frames), may be performed after for instance the incident or after finishing of the patrolling and stored in the data management system. The encoding of the stored remaining image frames may hence be performed either at the camera 200 (or the image processing device 100 of the camera 200), or external to the camera (such as in the data management system).

The camera 200 may hence comprise a transmitter 150, configured to wirelessly transmit the encoded subset and/or encoded video to an externally arranged receiver, such as the data management system. The transmitter may in an embodiment be configured to continuously transfer the encoded subset of image frames to the data management system.

The components and functions of the above-disclosed image processing device 100 may in some embodiments be structurally and geographically distributed. The functions of the encoder 110 may for example be distributed between the camera 200 and a system external to the camera, such that the subset of image frames are encoded locally at the camera 200 and the encoding of the stored remaining image frames is performed external to the camera 200, such as in the above-described data management system. The same reasoning applies to the memory 120, which may be arranged remote from the camera 200 and configured to receive the remaining image frames from the camera 200 over a wired or wireless link. In a specific example, a system of a plurality of cameras 200 may be provided, wherein the encoding of the subset may be performed by a first one of the cameras and the encoding of the stored remaining image frames may be performed by another one of the plurality of cameras, having available processing resources. Thus, the cameras of the system may assist each other in the processing of the image frames, such as encoding and decoding, based on how the available resources are distributed over the system.

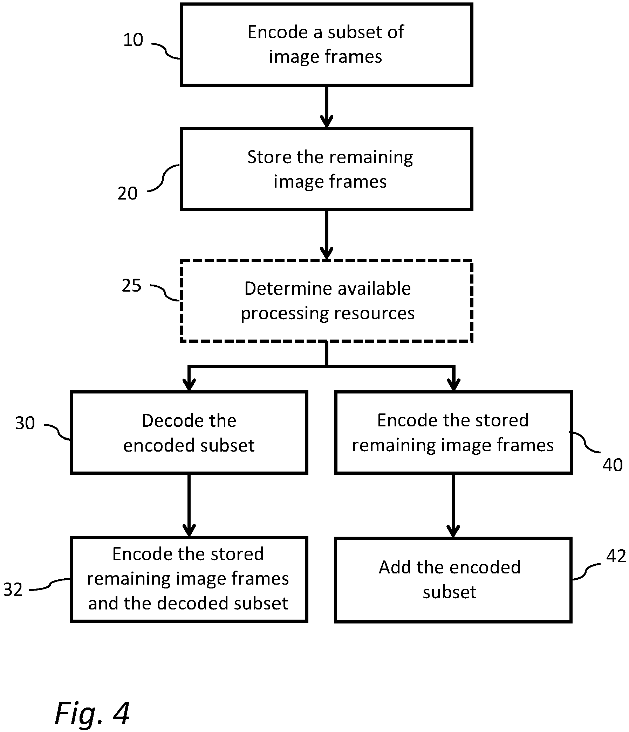

A method for encoding a video will now be discussed with reference to figure 4. The method is based on the insight made by the inventors that by partially encoding a sequence of image frames, captured between a first and second time, and saving the remaining image frames of the sequence for encoding at a later point in time, after the second time, bitrate and power may be saved in situations where bandwidth and power are limited.

Some or all the steps of the method may be performed by the functions of the image processing device 100 described above. The method comprises the steps described in the following. Unless a step specifically depends on the result of another step, the steps may be performed in any suitable order.

The method comprises encoding 10 a subset of the image frames of the sequence of image frames captured between the first and second time, wherein the image frames of the subset are distributed over the sequence. The method further comprises storing 20 the remaining image frames of the sequence, and, after the second time, either decoding 30 the encoded subset and encoding 32 the stored remaining image frames and the decoded encoded subset, thereby generating the encoded video, or encoding 40 the stored remaining image frames and adding 42 the encoded subset, thereby generating the encoded video. The subset may in some embodiments be encoded in a base layer, and the stored remaining image frames in an enhancement layer.

The method may further comprise determining 25 available processing resources for the encoding and determining when the above-described steps 30, 32 and 40, 42 are to be performed based on the determined available processing resources. The decoding 30 of the encoded subset and encoding 32 of the stored remaining image frames together with the decoded encoded subset may hence be performed at a point in time when processing resources are determined to be available. The same applies to the steps of encoding 40 the stored remaining image frames and adding 42 the encoded subset. These steps may in a similar manner be performed at a time when processing resources are determined to be available.

Functions of the image processing device 100 may be embodied in the form of executable logic routines (e.g., lines of code, software programs, etc.) that are stored on a non-transitory computer readable medium (e.g., the memory 120) of the image processing device 100 and are executed by the circuitry 130 (e.g. using the processor 132). Furthermore, the functions of the image processing device 100 may be a stand-alone software application or form part of a software application that carries out additional tasks related to the image processing device 100. The described functions may be considered a method that a processing unit, e.g. the processor 132 of the circuitry 130 is configured to carry out. The method may be similar to the method outlined above in connection with figure 3. Also, while the described functions may be implemented in software, such functionality may as well be carried out via dedicated hardware or firmware, or some combination of hardware, firmware and/or software.

The person skilled in the art realizes that the present invention is not limited to the embodiments described above. On the contrary, many modifications and variations are possible within the scope of the appended claims. Such modifications and variations can be understood and effected by a skilled person in practicing the claimed invention, from a study of the drawings, the disclosure, and the appended claims.

## Claims

1. A method for encoding a video comprising a sequence of image frames captured between a first and a second time, comprising:
a) encoding (10) a subset of the image frames, wherein the image frames of the subset are distributed over the sequence;
b) storing (20) the remaining image frames of the sequence; and
after the second time:
c) decoding (30) the encoded subset and encoding (32) the stored remaining image frames and the decoded encoded subset, thereby generating the encoded video; or
d) encoding (40) the stored remaining image frames and adding (42) the encoded subset, thereby generating the encoded video.

2. The method according to claim 1, wherein:
step a) comprises encoding the subset in a base layer; and
step d) comprises encoding the stored remaining image frames in an enhancement layer.

3. The method according to claim 1 or 2, further comprising determining (25) available processing resources for the encoding, wherein steps c) or d) are performed at a time after the second time based on the determined available processing resources.

4. The method according to claim any of the preceding claims, wherein the subset is formed by selecting every n^{th} image frame of the sequence, wherein n is one of 2, 3, ... , 10.

5. The method according to any of the preceding claims, wherein the encoded subset comprises an intra-encoded frame and inter-encoded frames using prediction depending on the intra-encoded frame.

6. The method according to any of the preceding claims, comprising storing the remaining image frames of the sequence in a compressed format.

7. An image processing device (100) configured to encode a video comprising a sequence of image frames captured between a first and a second time, comprising:
an encoder (110) configured to encode image frames of the sequence;
a memory (120) configured to store image frames of the sequence; and
a circuitry (130) configured to provide a subset of the image frames to the encoder to generate an encoded subset, wherein the image frames of the subset are distributed over the sequence, and to provide the remaining image frames of the sequence to the memory;
wherein:
the image processing device further comprises a decoder (140), and wherein the circuitry is further configured to provide, after the second time, the encoded subset to the decoder to generate a decoded encoded subset, and to provide the decoded encoded subset and the stored remaining image frames the encoder to generate the encoded video; or
the circuitry is further configured to provide, after the second time, the stored remaining image frames to the encoder, and to instruct the encoder to encode the stored remaining image frames and add the encoded subset to generate an encoded video.

8. A camera (200) comprising the image processing device according to claim 7.

9. The camera according to claim 8, wherein the camera is a portable camera.

10. The camera according to claim 9, wherein the camera is a wearable camera.

11. A non-transitory computer readable storage medium having stored thereon instructions for implementing the method according to any one of claims 1-6, when executed on a device having processing capabilities.

## Amended claims

### Amended claims in accordance with Rule 137(2) EPC.

1. A method for encoding a video in an image processing device, the video comprising a sequence of image frames captured between a first and a second time, the method comprising:
a) encoding (10) a subset of the image frames, wherein the image frames of the subset are distributed over the sequence;
b) storing (20) the remaining image frames of the sequence on a memory of the image processing device; and
after the second time:
c) decoding (30) the encoded subset and encoding (32) the stored remaining image frames and the decoded encoded subset, thereby generating the encoded video; or
d) encoding (40) the stored remaining image frames and adding (42) the encoded subset, thereby generating the encoded video.

2. The method according to claim 1, wherein:
step a) comprises encoding the subset in a base layer; and
step d) comprises encoding the stored remaining image frames in an enhancement layer.

3. The method according to claim 1 or 2, further comprising determining (25) available processing resources for the encoding, wherein steps c) or d) are performed at a time after the second time based on the determined available processing resources.

4. The method according to claim any of the preceding claims, wherein the subset is formed by selecting every n^{th} image frame of the sequence, wherein n is one of 2, 3, ... , 10.

5. The method according to any of the preceding claims, wherein the encoded subset comprises an intra-encoded frame and inter-encoded frames using prediction depending on the intra-encoded frame.

6. The method according to any of the preceding claims, comprising storing the remaining image frames of the sequence in a compressed format.

7. An image processing device (100) configured to encode a video comprising a sequence of image frames captured between a first and a second time, comprising:
an encoder (110) configured to encode image frames of the sequence;
a memory (120) configured to store image frames of the sequence; and
a circuitry (130) configured to provide a subset of the image frames to the encoder to generate an encoded subset, wherein the image frames of the subset are distributed over the sequence, and to provide the remaining image frames of the sequence to the memory;
wherein:
the image processing device further comprises a decoder (140), and wherein the circuitry is further configured to provide, after the second time, the encoded subset to the decoder to generate a decoded encoded subset, and to provide the decoded encoded subset and the stored remaining image frames the encoder to generate the encoded video; or
the circuitry is further configured to provide, after the second time, the stored remaining image frames to the encoder, and to instruct the encoder to encode the stored remaining image frames and add the encoded subset to generate an encoded video.

8. A camera (200) comprising the image processing device according to claim 7.

9. The camera according to claim 8, wherein the camera is a portable camera.

10. The camera according to claim 9, wherein the camera is a wearable camera.

11. A non-transitory computer readable storage medium having stored thereon instructions for implementing the method according to any one of claims 1-6, when executed on a device having processing capabilities.
